# EUROPEAN PATENT APPLICATION

(11) **EP 4 768 986 A1**
(43) Date of publication of application: **01.07.2026**
(21) Application number: 25227666.2
(22) Date of filing: 30.12.2025
(51) Int. Cl.: G01S 7/481, G01S 7/497, G01S 17/931

(54) **AZIMUTH ANGLE CALIBRATION METHOD FOR LIDAR, CALIBRATION APPARATUS, AND LIDAR**

(30) Priority: 31.12.2024 CN 202411996382
(71) Applicant: Suteng Innovation Technology Co., Ltd, Shenzhen City Guangdong 518000 (CN)
(72) Inventor: PEI, Guanxing, Shenzhen City (CN); ZHANG, Teng, Shenzhen City (CN); MA, Feng, Shenzhen City (CN); LIU, Runshan, Shenzhen City (CN); ZOU, Zhenyu, Shenzhen City (CN)
(74) Representative: Ran, Handong

(57) **Abstract**

An azimuth angle calibration method for a LiDAR, an azimuth angle calibration apparatus, and a LiDAR are disclosed. The method includes acquiring calibration point cloud data comprising at least one frame of point cloud data from the LiDAR. A measured azimuth angle is determined based on the calibration point cloud data, where the measured azimuth angle corresponds to a calibration zone. A compensation coefficient is calculated using the measured azimuth angle and a preset angle value. Angle compensation is then applied to azimuth angle information of detection point cloud data based on the compensation coefficient, wherein the detection point cloud data is generated during LiDAR operation. This method improves control accuracy in LiDAR scanning processes by compensating for directional angle errors.

## Description

### TECHNICAL FIELD

The present application relates to the field of laser detection technology, and in particular, to an azimuth angle calibration method for a LiDAR, an azimuth angle calibration apparatus, and a LiDAR.

### BACKGROUND

LiDAR is a system that emits laser beams to detect parameters of a target, such as its position and velocity. Its working principle involves first transmitting detection light towards a target object, then receiving the echo light reflected back from the target. After appropriate processing, relevant information about the target can be obtained, such as parameters including target distance, azimuth, height, velocity, attitude, and even shape.

Generally, a LiDAR comprises a housing, a transceiver module, and a scanning module. The housing serves as a mounting base for the other structures of the LiDAR. The transceiver module is used to emit detection light for detecting a target object and to receive echo light formed by the reflection of the detection light from the target object. The scanning module includes a scanning element, such as a Micro-Electro-Mechanical System (MEMS) mirror, which is rotatable relative to the housing. This scanning element is used to receive the detection light emitted by the transceiver module and deflect it, thereby causing the detection light to form a specific detection field of view, which enables the detection of target objects within said field of view. Correspondingly, the scanning element is also used to receive the echo light and deflect it, so that the echo light is directed towards the transceiver module.

### SUMMARY

In related art, LiDAR systems utilize external components such as calibration plates to calibrate the angular position scanned by the scanning element. For example, by placing a calibration plate at different angular positions within the LiDAR's detection field of view, the relationship between the feedback signal (e.g., feedback voltage signal) of the scanning element and the azimuth angle (such as the horizontal azimuth angle or vertical elevation angle) of the calibration plate relative to the LiDAR is calibrated. Subsequently, the mapping relationship between the scanning element's feedback signal and the azimuth angle of the detection light (i.e., the scanning element's azimuth angle) can be obtained. However, as the operating time increases, the feedback sensitivity of the scanning element changes, meaning the amplitude of the feedback signal per unit rotation angle of the scanning element varies. If the LiDAR still determines the azimuth angle corresponding to a target object based on the mapping relationship calibrated before leaving the factory, there will be a significant discrepancy between the measured azimuth angle and the actual azimuth angle of the target object. This ultimately manifests as a decrease in the control accuracy of the LiDAR's scanning process within the detection field of view.

The present application aims to provide an azimuth angle calibration method for a LiDAR, an azimuth angle calibration apparatus, and a LiDAR, to address the issue of declining control accuracy during the scanning process of LiDARs in the related art.

In a first aspect, an embodiment of the present application provides an azimuth angle calibration method for a LiDAR. The LiDAR comprises a calibration element located within a detection field of view of the LiDAR, and the calibration element is provided with a calibration zone. The method comprises:
acquiring calibration point cloud data, wherein the calibration point cloud data comprises at least one frame of point cloud data of the LiDAR;
determining a measured azimuth angle according to the calibration point cloud data, wherein the measured azimuth angle is a measured value of an azimuth angle corresponding to the calibration zone;
determining a compensation coefficient according to the measured azimuth angle and a preset angle value; and
performing angle compensation on azimuth angle information of detection point cloud data of the LiDAR according to the compensation coefficient, wherein the detection point cloud data is point cloud data formed during operation of the LiDAR.

In some embodiments, a reflectivity of the calibration zone is higher than a first threshold. The step of determining the measured azimuth angle according to the calibration point cloud data comprises:
determining, within the calibration point cloud data, a target region constituted by points having a pulse width greater than a pulse width threshold in the point cloud data; and
determining an azimuth angle corresponding to a center point of the target region as the measured azimuth angle.

In some embodiments, the calibration element further comprises a reference region. The reference region is a region having a reflectivity lower than a second threshold, the second threshold is less than the first threshold, and the reference region is adjacent to the calibration zone.

In some embodiments, the reference region surrounds the corresponding calibration zone. The first threshold is greater than or equal to 80%, and the second threshold is less than or equal to 30%.

In some embodiments, the LiDAR comprises one calibration zone. The preset angle value is an azimuth angle at which the calibration zone is located within the detection field of view when a feedback signal from the scanning element is normal.

In some embodiments, the LiDAR comprises a housing, a transceiver module, a scanning module, and two of the calibration elements. The transceiver module is configured to generate detection light for detecting a target object and to receive echo light formed by reflection of the detection light from the target object. The scanning module comprises a scanning element rotatable relative to the housing. The scanning element is configured to receive and reflect the detection light to enable the detection light to form the detection field of view of the LiDAR. The calibration zones of the two calibration elements are symmetrically distributed about a reference vertical plane. The reference vertical plane is a plane passing through a central axis of the detection field of view of the LiDAR and perpendicular to a bottom surface of the LiDAR. The step of determining the measured azimuth angle comprises: determining measured azimuth angles corresponding to the calibration zones of the two calibration elements. The step of determining the compensation coefficient according to the measured azimuth angle and the preset angle value comprises:
determining a measured included angle according to the two measured azimuth angles, wherein the measured included angle is a measured value of an included angle formed by the two calibration zones within the detection field of view; and
determining the compensation coefficient according to the measured included angle and the preset angle value, wherein the preset angle value is an included angle value formed by the two calibration zones within the detection field of view when the feedback from the scanning element is normal.

In some embodiments, the step of determining the compensation coefficient according to the measured included angle and the preset angle value comprises:
determining a ratio of the measured included angle to the preset angle value as the compensation coefficient; or,
determining a ratio of the preset angle value to the measured included angle as the compensation coefficient.

In some embodiments, the step of determining the measured included angle according to the two measured azimuth angles comprises:
determining a ratio of one measured azimuth angle to a corresponding first preset angle value as a first ratio, wherein the first preset angle value is an angle determined based on an azimuth angle at which one calibration zone is located within the detection field of view when the feedback from the scanning element is normal;
determining a ratio of the other measured azimuth angle to a corresponding second preset angle value as a second ratio, wherein the second preset angle value is an angle determined based on an azimuth angle at which the other calibration zone is located within the detection field of view when the feedback from the scanning element is normal; and
if a similarity between the first ratio and the second ratio is higher than a similarity threshold, then determining the measured included angle according to the two measured azimuth angles, wherein the measured included angle is a measured value of the included angle formed by the two calibration zones within the detection field of view.

In some embodiments, the step of performing angle compensation on the azimuth angle information of the detection point cloud data according to the compensation coefficient comprises:
when determining an azimuth angle corresponding to the detection point cloud data, further dividing the azimuth angle by the compensation coefficient to obtain a calibrated azimuth angle of the detection point cloud data.

In some embodiments, the LiDAR comprises a scanning module. The scanning module comprises a scanning element rotatable relative to a housing of the LiDAR. The scanning element is configured to receive and deflect detection light to enable the detection light to form the detection field of view. The detection light is used for detecting a target object. A first preset mapping relationship exists between a feedback signal of the scanning element and a corresponding azimuth angle. The step of performing angle compensation on the point cloud data according to the compensation coefficient comprises: updating the first preset mapping relationship to a second preset mapping relationship according to the compensation coefficient.

In another aspect, an embodiment of the present application further provides an azimuth angle calibration apparatus, applied to a LiDAR. The LiDAR comprises a calibration element located within a detection field of view of the LiDAR, and the calibration element is provided with a calibration zone. The azimuth angle calibration apparatus comprises an acquisition module, a first determination module, a second determination module, and a compensation module. The acquisition module is configured to acquire calibration point cloud data, wherein the calibration point cloud data comprises at least one frame of point cloud data of the LiDAR. The first determination module is configured to determine a measured azimuth angle according to the calibration point cloud data, wherein the measured azimuth angle is a measured value of an azimuth angle corresponding to the calibration zone. The second determination module is configured to determine a compensation coefficient according to the measured azimuth angle and a preset angle value. The compensation module is configured to perform angle compensation on azimuth angle information of detection point cloud data of the LiDAR according to the compensation coefficient, wherein the detection point cloud data is point cloud data formed during operation of the LiDAR.

In yet another aspect, an embodiment of the present application further provides a LiDAR. The LiDAR comprises a housing, a transceiver module, a scanning module, and a calibration element. The housing is provided with an accommodation cavity. The transceiver module is disposed in the accommodation cavity and is configured to generate detection light for detecting a target object and to receive echo light formed by reflection of the detection light from the target object. The scanning module is disposed in the accommodation cavity. The scanning module comprises a scanning element rotatable relative to the housing. The scanning element is configured to receive and reflect the detection light to enable the detection light to form a detection field of view of the LiDAR. The calibration element is disposed in the accommodation cavity and comprises a calibration zone. The calibration zone is located within the detection field of view.

In a further aspect, the present application further provides a LiDAR. The LiDAR comprises a memory and a processor. The memory is configured to store executable program code. The processor is configured to invoke and run the executable program code from the memory, causing the LiDAR to execute the method described above.

### Advantageous effects of the embodiments of the present application:

The azimuth angle calibration method for a LiDAR provided by the embodiments of the present application acquires calibration point cloud data, then determines a measured azimuth angle corresponding to the calibration zone based on the calibration point cloud data, subsequently determines a compensation coefficient according to the measured azimuth angle and a preset angle value, and finally performs angle compensation on the detection point cloud data of the LiDAR based on the compensation coefficient. Even if the sensitivity of the scanning element changes, the method provided in this embodiment can ensure that the azimuth angle information carried by the calibrated detection point cloud data is consistent with the azimuth angle information obtained when the scanning element's feedback is normal. Therefore, the calibration method provided by the embodiments of the present application can address the issue of declining control accuracy during the scanning process of LiDARs in the related art.

### BRIEF DESCRIPTION OF DRAWINGS

### Brief Description of the Drawings

In order to illustrate the technical solutions in the embodiments of the present application or the prior art more clearly, the following will briefly introduce the drawings needed for describing the embodiments or the prior art. Obviously, the drawings in the following description are only some embodiments of the present application. For those of ordinary skill in the art, other drawings can be obtained based on these drawings without creative effort.
FIG. 1 is a structural block diagram of a LiDAR provided by some embodiments of the present application.
FIG. 2 is a schematic diagram showing the arrangement position of a calibration element within the detection field of view of a LiDAR according to some of the embodiments of the present application.
FIG. 3 is a schematic diagram showing the arrangement position of a calibration element within the detection field of view of a LiDAR according to some other embodiments of the present application.
FIG. 4 is a schematic flowchart of an azimuth angle calibration method for a LiDAR provided by an embodiment of the present application.
FIG. 5A is a schematic diagram of pulse width in color form provided by some embodiments of the present application.
FIG. 5B is a schematic diagram of pulse width in grayscale form provided by some embodiments of the present application.
FIG. 6 is a schematic flowchart of an azimuth angle calibration method for a LiDAR provided by some other embodiments of the present application.
FIG. 7 is a flowchart illustrating step S230.
FIG. 8 is a flowchart illustrating step S231.
FIG. 9 is a schematic diagram of an azimuth angle calibration apparatus provided by some embodiments of the present application.
FIG. 10 is a schematic diagram of a LiDAR provided by some embodiments of the present application.

### Description of Reference Numerals:

100: LiDAR
110: Housing
120: Transceiver Module
130: Scanning Module
140: Calibration Element
141: Calibration Zone
142: Reference Region
200: Azimuth Angle Calibration Apparatus
210: Acquisition Module
220: First Determination Module
230: Second Determination Module
240: Compensation Module
300: LiDAR
310: Processor
320: Memory

### DETAILED DESCRIPTION

To make the objectives, technical solutions, and advantages of the present application clearer, the following describes the embodiments of the present application in further detail with reference to the accompanying drawings.

When the following description involves the accompanying drawings, unless otherwise indicated, the same numerals in different drawings represent the same or similar elements. The implementation methods described in the following exemplary embodiments do not represent all implementation methods consistent with the present application. Rather, they are merely examples of devices and methods consistent with some aspects of the present application as detailed in the appended claims.

In related art, LiDAR systems use external components such as calibration plates to calibrate the deflection angle of the scanning element. For example, by placing a calibration plate at different angular positions within the LiDAR's detection field of view, the relationship between the feedback signal (e.g., feedback voltage signal) of the scanning element and the azimuth angle (such as the horizontal azimuth angle or vertical elevation angle) of the calibration plate relative to the LiDAR is calibrated. Subsequently, the mapping relationship between the scanning element's feedback signal and the azimuth angle of the detection light (i.e., the scanning element's azimuth angle) can be obtained. However, as the operating time increases, the feedback sensitivity of the scanning element changes, meaning the amplitude of the feedback signal per unit rotation angle of the scanning element varies. If the LiDAR still determines the azimuth angle corresponding to a target object based on the mapping relationship calibrated before leaving the factory, there will be a significant discrepancy between the measured azimuth angle and the actual azimuth angle of the target object. This ultimately manifests as a decrease in the control accuracy of the LiDAR's scanning process within the detection field of view.

Based on this, embodiments of the present application provide an azimuth angle calibration method for a LiDAR to address the issue of declining control accuracy during the scanning process of LiDARs in the related art. This method can be executed by a controller of the LiDAR; for example, the controller includes a processor and a memory, and the processor executes the azimuth angle calibration method for the LiDAR provided by the embodiments of the present application by running a computer program stored in the memory.

To facilitate understanding of this method, a brief description of the overall structure of the LiDAR and the structures that may be used in this method is provided first.

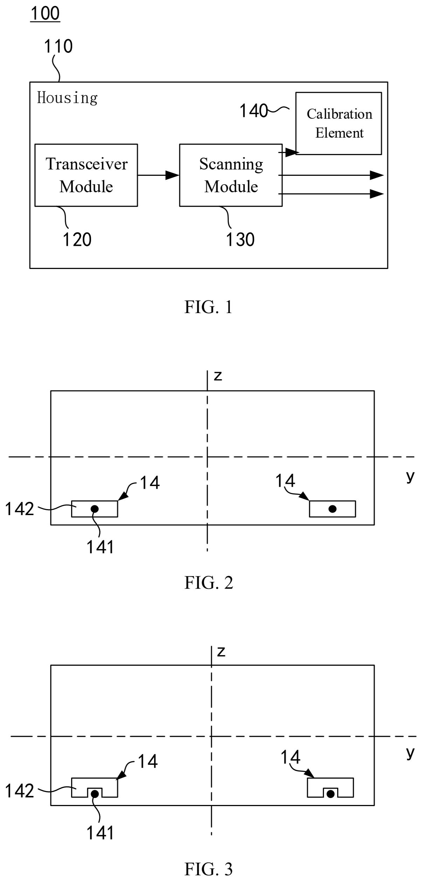

Please refer to FIG. 1, which shows a structural block diagram of a LiDAR provided by some embodiments of the present application. The LiDAR 100 includes a housing 110, a transceiver module 120, and a scanning module 130. The housing 110 is provided with an accommodation cavity for accommodating the transceiver module 120 and the scanning module 130. Meanwhile, the housing 110 also serves as a mounting base and protective structure for other components in the LiDAR 100.

The transceiver module 120 is disposed in the accommodation cavity and is a module used for emitting detection light and receiving echo light. For example, the transceiver module 120 may include a laser and a photodetector. The laser is used to emit detection light, allowing the detection light to be deflected by the scanning module 130 and exit the LiDAR 100 to detect target objects. The laser can be an Edge-Emitting Semiconductor Laser (EEL) or a Vertical-Cavity Surface-Emitting Laser (VCSEL). The present application does not limit the type of laser, as long as it can generate laser light, i.e., detection light, to detect target objects. The photodetector is used to receive echo light and perform photoelectric conversion on the echo light to obtain an echo signal in the form of an electrical signal, so that the LiDAR 100 can determine information such as the distance, velocity, azimuth, and reflectivity of the target object relative to the LiDAR 100 through this echo signal. The photodetector can be a Single Photon Avalanche Diode (SPAD), a Silicon Photomultiplier (SiPM), or other types of detectors. The present application does not limit the type of photodetector, as long as it can receive echo light and perform conversion. It should be noted that the "target object" mentioned in this application document refers to the detection object of the LiDAR 100, including but not limited to: vehicles, pedestrians, buildings, ground, and vegetation; the "detection light" mentioned in this application document refers to the laser beam emitted from the LiDAR 100 to the aforementioned target object; the "echo light" mentioned in this application document refers to the laser beam reflected from the aforementioned target object to the LiDAR 100 and received by the photodetector.

In addition, the transceiver module 120 may also include a beam splitter, a transmission optical system, and a reception optical system. The beam splitter is used to separate the optical paths of the detection light and the echo light. For example, the beam splitter can be an aperture mirror; specifically, the beam splitter is arranged obliquely relative to the propagation direction of the detection light, has a through hole in the central part for the detection light to pass through, and is coated with a reflective film on the side facing away from the laser, with the reflective film surrounding the through hole, so that the echo light falling on the beam splitter is reflected by the reflective film, thereby achieving optical path separation between the detection light and the echo light. Of course, the beam splitter can also be a half-silvered mirror, a polarizing beam splitter, or other optical elements that can achieve beam splitting. The transmission optical system is arranged in the optical path between the laser and the beam splitter and is used to collimate the detection light so that it propagates in an approximately parallel beam; the transmission optical system may include one or more lenses. The reception optical system is arranged in the optical path between the beam splitter and the photodetector and is used to converge the echo light so that it can be received by the photodetector with a small spot size.

The scanning module 130 is disposed in the accommodation cavity and is a module used to achieve scanning of the detection light. The scanning module 130 includes a scanning element that can rotate relative to the housing 110. The scanning element is used to receive the detection light emitted from the transceiver module 120 and deflect it. Since the scanning element is rotatable, the detection light can form a specific detection field of view as the scanning element rotates. Target objects located within this detection field of view can be detected by the LiDAR 100. The scanning element can be a galvanometer; for example, the scanning element can be a one-dimensional galvanometer, which can rotate about one axis to achieve line scanning of the detection light; alternatively, the scanning element can be a two-dimensional galvanometer, which can rotate about two intersecting axes to achieve surface scanning of the detection light. The galvanometer can be a MEMS galvanometer, which has advantages such as small size, high integration, and good reliability.

In addition to the transceiver module 120 and the scanning module 130 described above, the LiDAR 100 provided by the embodiments of the present application further includes a calibration element 140, which serves as a calibration object for implementing the azimuth angle calibration of the LiDAR 100. Please refer to FIG. 2, which shows a schematic diagram of the arrangement position of the calibration element 140 within the detection field of view of the LiDAR 100 according to some embodiments. The calibration element 140 includes a calibration zone 141, which is located within the detection field of view of the LiDAR 100. For example, in this embodiment, the calibration zone 141 is located within the detection field of view formed by the scanning of the scanning module 130. The calibration zone 141 can be an area with a reflectivity higher than a first threshold. The first threshold can be configured as a high reflectivity value, such as 50%, 70%, 80%, or other values above 50%. Thus, points corresponding to the calibration zone 141 in a frame of point cloud data of the LiDAR 100 will have significant distinctiveness, and this calibration zone 141 can be relatively easily identified from the point cloud data based on the characteristic of high reflectivity.

Preferably, the calibration element 140 may further include a reference region 142, which serves as a reference system when determining the calibration zone 141 and is configured as adjacent to the calibration zone 141. Herein, "adjacent" means that the reference region 142 is physically very close to the calibration zone 141. For example, the physical distance between the reference region 142 and the calibration zone 141 can be less than 5mm, less than 3mm, less than 2mm, or less than 1mm, or it can be 0, meaning the reference region 142 and the calibration zone 141 are in contact. For example, please continue to refer to FIG. 2. In this embodiment, the reference region 142 is generally rectangular in shape with a gap inside, and the calibration zone 141 is located in this gap. As another example, please refer to FIG. 3, which shows a schematic diagram of the arrangement position of the calibration element 140 within the detection field of view according to some other embodiments of the present application. In some other embodiments of the present application, the reference region 142 is still rectangular and has a gap on one side, and the calibration zone 141 is located in this gap. Of course, in still other embodiments of the present application, the reference region 142 and the calibration zone 141 can have other shapes, which is not limited in this application.

As mentioned earlier, the purpose of setting the reference region 142 is to facilitate the determination of the calibration zone 141. Therefore, the reference region 142 needs to be configured to be different from the calibration zone 141. In this embodiment, the reflectivity of the reference region 142 can be lower than a second threshold. For example, when the first threshold is 80%, the second threshold can be 30%, 20%, 10%, 5%, or other reflectivity values lower than the first threshold. That is, the calibration zone 141 is a high-reflectivity area, and the reference region 142 is a low-reflectivity area. Thus, the calibration zone 141 and the reference region 142 can be regarded as a closed environmental system. Even if there are other high-reflectivity target objects in a frame of point cloud data from the LiDAR 100, since the reference region 142 is arranged near the calibration zone 141, for example, surrounding the calibration zone 141, the reference region 142 and the calibration zone 141 together constitute an area with a low-reflectivity-high-reflectivity-low-reflectivity characteristic change. The reference region 142 can isolate the calibration zone 141 from other high-reflectivity objects. Therefore, after acquiring the point cloud data, the LiDAR 100 can efficiently determine the calibration zone 141 from the point cloud data. It should be noted that "surrounding" in the embodiments of the present application means that one region extends around the circumference of another region. The former may completely envelop the latter, i.e., the former extends around the latter in a ring shape, or it may expose part of the latter, i.e., the former extends around the latter in a ring shape with an interval between its ends.

In some embodiments, the number of calibration elements 140 can be multiple. For example, referring to FIGS. 2 and 3, the LiDAR 100 may include two calibration elements 140. The calibration zones 141 of these two calibration elements 140 are symmetrically distributed about a reference vertical plane. The "reference vertical plane" mentioned in the embodiments of the present application refers to a plane passing through the central axis of the detection field of view of the LiDAR 100 and perpendicular to the bottom surface of the LiDAR 100.

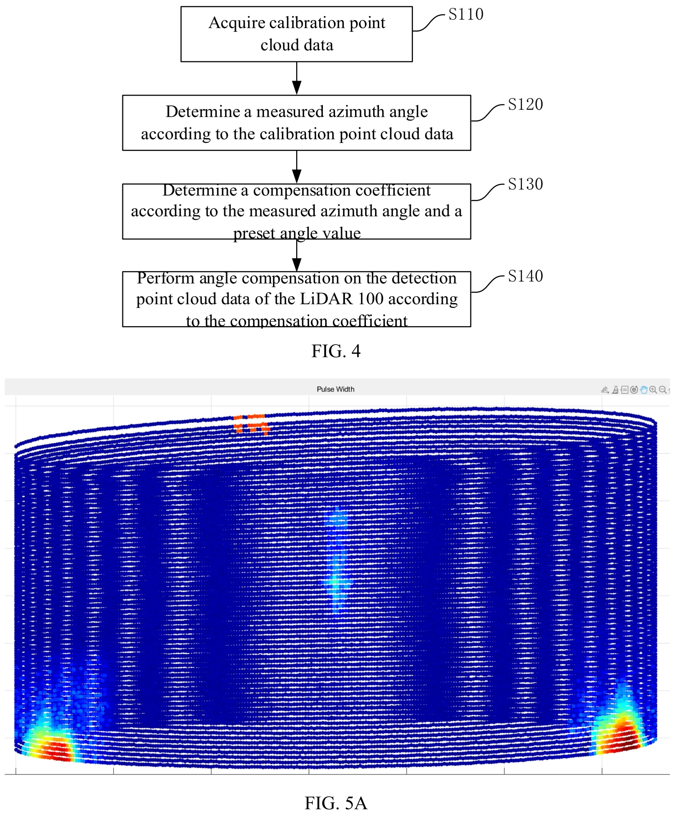

Next, the azimuth angle calibration method for the LiDAR 100 provided by the embodiments of the present application will be described in detail. As shown in FIG. 4, the method provided by the embodiment of the present application includes the following steps S110 to S140.

### Step S110: Acquire calibration point cloud data.

The point cloud data is obtained based on the LiDAR 100 scanning target objects in the surrounding environment. Specifically, each time the LiDAR 100 emits detection light, it receives the corresponding echo light, performs photoelectric conversion to obtain the corresponding echo signal (electrical signal), and further determines the distance corresponding to the echo signal based on the echo signal. Based on the feedback signal (e.g., feedback voltage) of the scanning module 130 when the detection light is emitted this time, the emission angle of the detection light, i.e., the azimuth angle corresponding to this detection, can be determined. The azimuth angle refers to the angle at which the detection light/echo light/target object is located relative to the LiDAR 100 within the detection field of view of the LiDAR 100 during this detection process. The azimuth angle may include a horizontal azimuth angle and a vertical elevation angle. Combining the distance value corresponding to the echo signal and the corresponding azimuth angle information, the coordinate information (x, y, z) of the position where the detection light hits the target object can be determined in the Cartesian coordinate system. Based on this, each point in the point cloud data can carry information such as longitudinal coordinate x, horizontal coordinate y, vertical coordinate z, horizontal azimuth angle (also called yaw angle) yaw, vertical elevation angle pitch, pulse width, and reflection intensity i in the form of data to characterize the detection of this pulse signal. As the transceiver module 120 continuously emits detection light and receives echo light, and the scanning element completes one full rotation cycle, a large amount of data can be obtained. Each piece of data carries the aforementioned information such as longitudinal coordinate x, horizontal coordinate y, vertical coordinate z, horizontal azimuth angle, vertical elevation angle, pulse width, and reflection intensity. The collection of these data can be called point cloud data. The point cloud data can be presented in the Cartesian coordinate system based on the coordinate information (x, y, z), azimuth angle information (yaw, pitch), pulse width information (width), and reflection intensity information (i) to form three-dimensional point cloud data. The point cloud data obtained from one complete scan by the scanning element is each frame of point cloud data.

It is worth mentioning that the point cloud data can display different carried information in different scenarios. For example, before the LiDAR leaves the factory, the more information the point cloud data displays, the better. Therefore, the point cloud data can display coordinate information (x, y, z), azimuth angle information (yaw, pitch), pulse width information (width), and reflection intensity information (i). As another example, after the LiDAR is installed on a vehicle, the point cloud data may only display information that is significant to the user. Therefore, the point cloud data can display coordinate information (x, y, z), azimuth angle information (yaw, pitch), and reflection intensity information (i), but not pulse width information (width). As yet another example, when the LiDAR is performing azimuth angle calibration/detection, the more information the point cloud data displays, the better. Therefore, the point cloud data can still display coordinate information (x, y, z), azimuth angle information (yaw, pitch), pulse width information (width), and reflection intensity information (i).

The calibration point cloud data includes at least one frame of point cloud data. For example, in this embodiment, the calibration point cloud data may include one frame of point cloud data. The calibration point cloud data is used to judge whether the current sensitivity of the scanning element has changed compared to when the LiDAR 100 left the factory.

Step S120: Determine a measured azimuth angle according to the calibration point cloud data; wherein the measured azimuth angle is the measured value of the azimuth angle corresponding to the calibration zone 141.

After acquiring the calibration point cloud data, the calibration zone 141 can be identified from the calibration point cloud data, and the azimuth angle corresponding to the calibration zone 141, i.e., the aforementioned measured azimuth angle, can be determined. Specifically, each point in the calibration point cloud data carries pulse width information of the echo signal. The pulse width information can be determined based on the time interval between the rising edge and the falling edge when the Time to Digital Converter (TDC) samples the echo signal. Since the calibration zone 141 is a high-reflectivity area, a set of points in the point cloud data whose pulse width is greater than a pulse width threshold can be identified. For ease of description, this set is referred to as the target region in this application document. Furthermore, a center point can be determined from the target region using an algorithm, and the azimuth angle corresponding to this center point is determined as the measured azimuth angle. It should be noted that the "pulse width threshold" mentioned in this application is intended to distinguish the target region from the calibration point cloud data. It can be determined by controlling the LiDAR 100 to scan multiple times to obtain a statistical value (such as the mean, or a statistically calculated value based on a specific weighting method) of the pulse widths of all points corresponding to the calibration zone 141 in the point cloud data, and then taking a preset multiple of this statistical value, such as 90% of the statistical value, as the pulse width threshold. Of course, the method for configuring the "pulse width threshold" can vary. For example, in implementations where the calibration element 140 includes the calibration zone 141 and the reference region 142, statistical values for the calibration zone 141 and the reference region 142 can be determined separately using the method described above, and then the arithmetic mean of these two statistical values (or a weighted average calculated based on the two statistical values according to a preset weighting ratio) can be taken as the pulse width threshold.

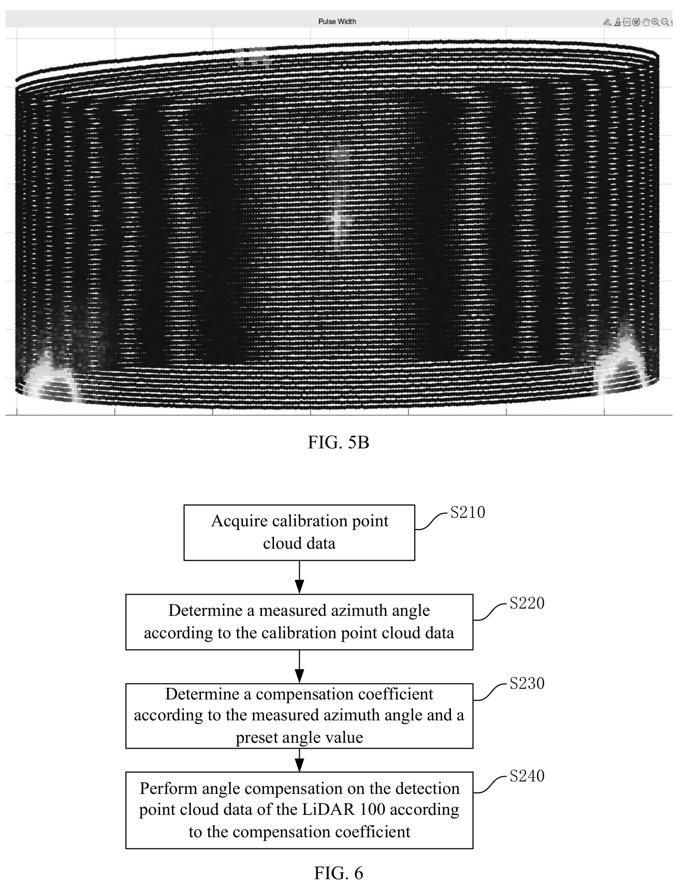

Next, the implementation of step S120 in some specific applications is explained. Please refer to FIGS. 5A and 5B, which show schematic diagrams of pulse width in color form and grayscale form, respectively, provided by some embodiments of the present application. In the figures, a coordinate system is established with the horizontal azimuth angle of the LiDAR 100 as the horizontal axis and the vertical elevation angle as the vertical axis. The points in the calibration point cloud data are mapped into this coordinate system, and the pulse width information carried by each point is represented by color. Blue indicates a small pulse width; from blue, green, yellow to red, the pulse width gradually increases. In this embodiment, the dark blue area shown in FIG. 5A represents areas where the pulse width is less than the pulse width threshold, and the areas shown in green, yellow, and red represent areas where the pulse width is greater than the preset threshold. As shown in the figure, the calibration point cloud data has a target region at the left edge of the horizontal azimuth angle and the lower edge of the vertical elevation angle, and another target region at the right edge of the horizontal azimuth angle and the lower edge of the vertical elevation angle. The content shown in FIG. 5B is substantially the same as that in FIG. 5A. The dark black areas in FIG. 5B represent areas where the pulse width is less than the pulse width threshold, and the gray-white and light black areas represent areas where the pulse width is greater than the preset threshold.

After identifying the target region(s), the azimuth angle of the center point of the target region can be determined based on all points in the target region. For example, the geometric center of the target region can be taken as the center point, or the point in the target region closest to the geometric center can be taken as the center point. Then, the horizontal azimuth angle and vertical elevation angle corresponding to the center point are determined as the measured azimuth angle.

In this embodiment, since a two-dimensional coordinate system is established based on the horizontal azimuth angle and vertical elevation angle, and the point cloud data is mapped into this coordinate system, determining the center point of the target region based on this directly yields the horizontal azimuth angle and vertical elevation angle of that center point. Of course, in other embodiments, a two-dimensional coordinate system can also be established based on the spatial coordinates (e.g., the horizontal coordinate y and vertical coordinate z determined based on the Cartesian coordinate system) of each point in the calibration point cloud data. Based on this, the target region is determined, and then its center point is further determined. Then, the horizontal azimuth angle and vertical elevation angle information carried by that center point are obtained. It is important to note that the center point fitted based on the target region might not correspond exactly to a point in the calibration point cloud data. In this case, the horizontal azimuth angle and vertical elevation angle information of the point closest to this center position can be taken as the horizontal azimuth angle and vertical elevation angle of the center point. Since both the center position and the point closest to it correspond to the calibration zone 141, the error introduced by this substitution is very small.

Considering that the horizontal field of view and scanning rate of the LiDAR 100 are significantly greater than those in the vertical direction, and the sensitivity requirement for the scanning element in the horizontal direction is higher than that in the vertical direction, this embodiment may determine only the horizontal azimuth angle of the center point as the measured azimuth angle. Subsequent steps for determining the compensation coefficient and performing azimuth angle information compensation are also based on the horizontal direction. However, it should be understood that the present application does not specifically limit this. In other embodiments of the present application, calibration for the vertical direction of the detection field of view can also be performed, i.e., determining the vertical elevation angle, further determining the corresponding compensation coefficient, and then performing angle compensation on the vertical elevation angle of the detection point cloud data.

Step S130: Determine a compensation coefficient according to the measured azimuth angle and a preset angle value.

The "preset angle value" mentioned in this application document is an angle value determined based on the azimuth angle at which the calibration zone 141 is located within the detection field of view when the feedback signal of the scanning element is normal (e.g., the feedback voltage amplitude is normal). For example, when the LiDAR 100 leaves the factory, the scanning angle of the scanning element (i.e., the emission angle of the detection light, the incident angle of the echo light) within the detection field of view and the feedback signal have been calibrated, and a corresponding first mapping relationship has been established. At this time, the feedback of the scanning element is normal, so the aforementioned preset angle value can be an angle value determined based on the azimuth angle at which the calibration zone 141 is located within the detection field of view, as determined when the LiDAR 100 left the factory. The determination method can be based on the feedback signal of the scanning element and the pre-calibrated first mapping relationship. It should be noted that "when the feedback signal of the scanning element is normal" in the embodiments of the present application means a state where the azimuth angle obtained based on the aforementioned feedback signal and the pre-calibrated first mapping relationship does not deviate from the actual azimuth angle by more than a preset deviation threshold. The preset deviation threshold should be a small value, such as less than or equal to 5%, less than or equal to 3%, or less than or equal to 1%. Additionally, the "pre-calibrated first mapping relationship" mentioned here is not necessarily the mapping relationship obtained at the time of leaving the factory; it could also be the mapping relationship obtained after iteration in the previous cycle of the current detection.

For example, in some embodiments, the LiDAR 100 includes one calibration zone 141. Correspondingly, the preset angle value can be the azimuth angle at which the calibration zone 141 is located within the detection field of view, as determined when the LiDAR 100 left the factory. After obtaining the measured azimuth angle of the calibration zone 141 in step S120, the measured azimuth angle can be compared with the aforementioned preset angle value. If there is a significant difference between the two, correction of the LiDAR 100's detection field of view is needed. Whether the difference is significant can be judged by the ratio of the two, the absolute value of the difference between their ratio and the constant 1, or other suitable methods, which are not limited in this application.

This embodiment uses compensation for the horizontal azimuth angle as an example for description. In this embodiment, the preset angle value can be regarded as the true field angle at which the calibration zone 141 is located relative to the LiDAR 100. The measured azimuth angle is the field angle of the calibration zone 141 relative to the LiDAR 100 measured when detecting whether the sensitivity of the scanning element is abnormal. Therefore, the compensation coefficient for the LiDAR 100 when measuring the azimuth angle can be determined as: σ = β₁ / α₁, where σ is the compensation coefficient, α₁ is the preset angle value, and β₁ is the measured azimuth angle. The compensation coefficient characterizes the difference between the measured value of the azimuth angle and the true value, and it is also the coefficient used for azimuth angle calibration of the LiDAR 100.

Step S140: Perform angle compensation on the detection point cloud data of the LiDAR 100 according to the compensation coefficient.

The detection point cloud data is the point cloud data formed during the operation of the LiDAR 100.

After obtaining the compensation coefficient, the preparatory work for the azimuth angle calibration method of the LiDAR 100 is basically complete. The compensation coefficient can be used to compensate the azimuth angle obtained based on the scanning element whose sensitivity has changed. For example, in some embodiments, when the LiDAR 100 determines the azimuth angle corresponding to a point in the detection point cloud data based on the feedback signal of the scanning element and a preset first mapping relationship (i.e., during the formation of the point cloud data), it can further divide by the aforementioned compensation coefficient to obtain a calibrated azimuth angle. The compensated azimuth angle information is then used as the information carried by that point in the point cloud data. As another example, in other embodiments, the first mapping relationship can be iterated based on the compensation coefficient. Specifically, if the azimuth angle is the dependent variable obtained by taking a characteristic of the scanning element's feedback signal (e.g., feedback voltage amplitude) as the independent variable and the first mapping relationship as the function, then the first mapping relationship can be divided by the compensation coefficient to obtain an iterated second mapping relationship. Then, based on the characteristic of the scanning element's feedback signal and the second mapping relationship, the calibrated azimuth angle information can be obtained, and this azimuth angle information is used as the information carried by the point in the point cloud data.

It is worth mentioning that although the above embodiment uses the ratio of the measured azimuth angle to the preset angle value as the compensation coefficient, the present application is not limited thereto. In other embodiments of the present application, the compensation coefficient can also be obtained in other forms based on the measured azimuth angle and the preset angle value. Accordingly, the method for compensating the subsequent point cloud data in step S140 can be adjusted accordingly. For example, in some other embodiments of the present application, the ratio of the preset angle value to the measured azimuth angle can be used as the compensation coefficient. In this case, step S140 would multiply the point cloud data by this compensation coefficient when performing angle compensation.

In summary, the azimuth angle calibration method for the LiDAR 100 provided by the embodiments of the present application acquires calibration point cloud data, then determines the measured azimuth angle corresponding to the calibration zone 141 based on the calibration point cloud data, subsequently determines the compensation coefficient according to the measured azimuth angle and the preset angle value, and finally performs angle compensation on the detection point cloud data of the LiDAR 100 based on the compensation coefficient. Even if the sensitivity of the scanning element changes, the method provided in this embodiment can ensure that the azimuth angle information carried by the calibrated detection point cloud data is consistent with the azimuth angle information obtained when the scanning element's feedback is normal. Therefore, the calibration method provided by the embodiments of the present application can address the issue of declining control accuracy during the scanning process of the LiDAR 100 in the related art.

The above embodiments are described using the example of calibration based on the calibration zone 141 of a single calibration element 140. However, it should be understood that the present application is not limited thereto. In other embodiments of the present application, azimuth angle calibration can also be performed based on the calibration zones 141 of multiple calibration elements 140.

For example, in some embodiments, field correction can be implemented based on the calibration zones 141 of two calibration elements 140. Please refer to FIG. 6. The azimuth angle calibration method for the LiDAR 100 may include the following steps S210 to S240.

### Step S210: Acquire calibration point cloud data.

The process of acquiring calibration point cloud data can refer to step S110 above and will not be repeated here.

Step S220: Determine a measured azimuth angle according to the calibration point cloud data; wherein the measured azimuth angle is the azimuth angle corresponding to the calibration zone 141.

After acquiring the calibration point cloud data, the calibration zone 141 can be identified from the calibration point cloud data, and the azimuth angle corresponding to the calibration zone 141, i.e., the aforementioned measured azimuth angle, can be determined. Specifically, each point in the point cloud data carries pulse width information of the echo signal. The pulse width information can be determined based on the time interval between the falling edge and the rising edge when the TDC samples the echo signal. Since the calibration zone 141 is a high-reflectivity area, a set of points in the point cloud data whose pulse width is greater than a pulse width threshold can be identified, which is the aforementioned target region. Furthermore, a center point can be determined from the target region using an algorithm, and the azimuth angle corresponding to this center point is determined as the measured azimuth angle.

In this embodiment, the LiDAR 100 includes two calibration elements 140. The calibration zones 141 of these two calibration elements 140 are symmetrically distributed about a reference vertical plane. The reference vertical plane is a plane passing through the central axis of the detection field of view of the LiDAR 100 and perpendicular to the bottom surface of the LiDAR 100. That is, when the LiDAR 100 is placed or installed horizontally, the calibration zones 141 of the two calibration elements 140 are symmetrically distributed along the horizontal direction in the field of view of the LiDAR 100. Therefore, step S220 includes: determining the measured azimuth angles corresponding to the calibration zones 141 of the two calibration elements 140.

Please refer to FIGS. 5A and 5B, which show schematic diagrams of pulse width provided by some embodiments of the present application. In the figures, a coordinate system is established with the horizontal azimuth angle of the LiDAR 100 as the horizontal axis and the vertical elevation angle as the vertical axis. The points in the point cloud data are mapped into this coordinate system, and the pulse width information carried by each point is represented by color. Blue indicates a small pulse width; from blue, green, yellow to red, the pulse width gradually increases. In this embodiment, the dark blue area shown in FIG. 5A represents areas where the pulse width is less than the pulse width threshold, and the areas shown in green, yellow, and red represent areas where the pulse width is greater than the preset threshold. As shown in the figure, the calibration point cloud data has a target region at the left edge of the horizontal azimuth angle and the lower edge of the vertical elevation angle, and another target region at the right edge of the horizontal azimuth angle and the lower edge of the vertical elevation angle. The content shown in FIG. 5B is substantially the same as that in FIG. 5A. The dark black areas in FIG. 5B represent areas where the pulse width is less than the pulse width threshold, and the gray-white and light black areas represent areas where the pulse width is greater than the preset threshold.

After identifying the two target regions, the azimuth angle of the center point of each target region can be determined based on all points in that target region. The azimuth angle of the center point of each target region is the measured azimuth angle corresponding to the calibration zone 141. For example, the geometric center of the target region can be taken as the center point, or the point in the target region closest to the geometric center can be taken as the center point. Then, the horizontal azimuth angle and vertical elevation angle corresponding to the center point are determined as the measured azimuth angle.

For each target region, in this embodiment, since a two-dimensional coordinate system is established based on the horizontal azimuth angle and vertical elevation angle, and the point cloud data is mapped into this coordinate system, determining the center point of the target region based on this directly yields the horizontal azimuth angle and vertical elevation angle of that center point. Of course, in other embodiments, a two-dimensional coordinate system can also be established based on the spatial coordinates (e.g., the horizontal coordinate y and vertical coordinate z determined based on the Cartesian coordinate system) of each point in the calibration point cloud data. Based on this, the target region is determined, and then its center point is further determined. Then, the horizontal azimuth angle and vertical elevation angle information carried by that center point are obtained. It is important to note that the center point fitted based on the target region might not correspond exactly to a point in the point cloud data. In this case, the horizontal azimuth angle and vertical elevation angle information of the point closest to this center position can be taken as the horizontal azimuth angle and vertical elevation angle of the center point. Since both the center position and the point closest to it correspond to the calibration zone 141, the error introduced by this substitution is very small.

Considering that the horizontal field of view and scanning rate of the LiDAR 100 are significantly greater than those in the vertical direction, and the sensitivity requirement for the scanning element in the horizontal direction is higher than that in the vertical direction, this embodiment may determine only the horizontal azimuth angle of the center point as the measured azimuth angle. Subsequent steps for determining the compensation coefficient and performing azimuth angle information compensation are also based on the horizontal direction. However, it should be understood that the present application does not specifically limit this. In other embodiments of the present application, calibration for the vertical direction of the detection field of view can also be performed, i.e., determining the vertical elevation angle, further determining the corresponding compensation coefficient, and then performing angle compensation on the vertical elevation angle of the detection point cloud data.

Step S230: Determine a compensation coefficient according to the measured azimuth angle and a preset angle value.

The "preset angle value" mentioned in this application document is an angle value determined based on the azimuth angle at which the calibration zone 141 is located within the detection field of view when the feedback signal of the scanning element is normal (e.g., the feedback voltage amplitude is normal). For example, when the LiDAR 100 leaves the factory, the scanning angle of the scanning element (i.e., the emission angle of the detection light, the incident angle of the echo light) within the detection field of view and the feedback signal have been calibrated, and a corresponding first mapping relationship has been established. At this time, the feedback of the scanning element is normal, so the aforementioned preset angle value can be an angle value determined based on the azimuth angle at which the calibration zone 141 is located within the detection field of view, as determined when the LiDAR 100 left the factory. The determination method can be based on the feedback signal of the scanning element and the pre-calibrated first mapping relationship. It should be noted that "when the feedback signal of the scanning element is normal" in the embodiments of the present application means a state where the azimuth angle obtained based on the aforementioned feedback signal and the pre-calibrated first mapping relationship does not deviate from the actual azimuth angle by more than a preset deviation threshold. The preset deviation threshold should be a small value, such as less than or equal to 5%, less than or equal to 3%, or less than or equal to 1%. Additionally, the "pre-calibrated first mapping relationship" mentioned here is not necessarily the mapping relationship obtained at the time of leaving the factory; it could also be the mapping relationship obtained after iteration in the previous cycle of the current detection.

In this embodiment, the LiDAR 100 includes two calibration zones 141. Correspondingly, the preset angle value can be the included angle formed by the azimuth angles of the two calibration zones 141 within the detection field of view, as determined when the LiDAR 100 left the factory, i.e., the angle determined by the origin of the LiDAR's detection field of view and the two calibration zones 141. For example, when leaving the factory, the horizontal azimuth angle of one of the two calibration elements 140 within the detection field of view is 55 degrees to the left, i.e., -55°, and the horizontal azimuth angle of the other is 55 degrees to the right, i.e., +55°. Then the aforementioned preset angle value is 110°.

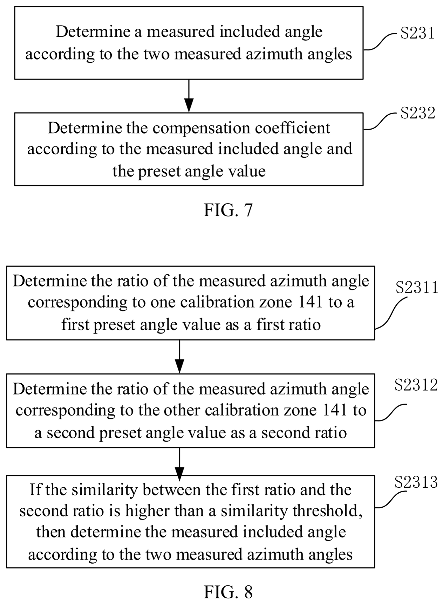

In some embodiments, please refer to FIG. 7. The aforementioned step S230 may include steps S231 to S232, as follows:
Step S231: Determine a measured included angle according to the two measured azimuth angles.

After obtaining the measured azimuth angles of the two calibration zones 141 in step S220, the measured included angle can be determined based on the two measured azimuth angles. The measured included angle is the measured value of the included angle formed by the two calibration zones 141 within the detection field of view. For example, if one of the measured azimuth angles is 57 degrees to the left, i.e., -57°, and the other is 57 degrees to the right, i.e., +57°, then the measured included angle is 114°.

Step S232: Determine the compensation coefficient according to the measured included angle and the preset angle value.

After obtaining the measured included angle, it can be compared with the aforementioned preset angle value. If there is a significant difference between the two, correction of the LiDAR 100's detection field of view is needed. Whether the difference is significant can be judged by the ratio of the two, the absolute value of the difference between their ratio and the constant 1, or other suitable methods, which are not limited in this application.

This embodiment still uses compensation for the horizontal azimuth angle as an example for description. In this embodiment, the preset angle value can be regarded as the true included angle formed by the two calibration zones 141 relative to the origin of the LiDAR 100's detection field of view. The measured included angle is the corresponding measured value. Based on this, the compensation coefficient for the LiDAR 100 when measuring the azimuth angle can be determined as: σ = β₂ / α₂, where σ is the compensation coefficient, α₂ is the preset angle value, and β₂ is the measured included angle. The compensation coefficient characterizes the difference between the measured value of the azimuth angle and the true value, and it is also the coefficient used for azimuth angle calibration of the LiDAR 100.

It should be noted that even if the sensitivity of the scanning element has not changed, the azimuth angle information in the point cloud data has measurement errors due to the scanning accuracy of the scanning element. Therefore, the horizontal distance between the two calibration elements 140 should be maximized as much as possible to dilute the impact of these measurement errors through a larger angular interval.

Considering that the sensitivity change of the scanning element on the left and right sides in the horizontal direction may be different, before determining the compensation coefficient using the included angle formed by the two calibration elements 140, it is possible to check whether the sensitivity changes on the left and right sides of the scanning element are basically the same. Specifically, please refer to FIG. 8. The aforementioned step S231 may include the following steps S2311 to S2313.

Step S2311: Determine the ratio of the measured azimuth angle corresponding to one calibration zone 141 to a first preset angle value as a first ratio, wherein the first preset angle value is an angle value determined based on the azimuth angle at which one calibration zone 141 is located within the detection field of view when the galvanometer feedback is normal.

The measured azimuth angle can be regarded as the measured value of the azimuth angle at which the corresponding calibration zone 141 is located within the detection field of view of the LiDAR 100. The first preset angle value can be the angle value of the azimuth angle at which this calibration zone 141 is located within the detection field of view of the LiDAR 100, which can be regarded as the true value of the azimuth angle at which this calibration zone 141 is located within the detection field of view of the LiDAR 100. The method for obtaining the first preset angle value can refer to the "preset angle value" in steps S110 to S140 and will not be repeated here. Before determining the compensation coefficient, a first ratio can be obtained based on the measured value and the true value of the azimuth angle of the same calibration zone 141. This first ratio can characterize the sensitivity change of the scanning element on the side of this calibration zone 141.

Step S2312: Determine the ratio of the measured azimuth angle corresponding to the other calibration zone 141 to a second preset angle value as a second ratio, wherein the second preset angle value is an angle value determined based on the azimuth angle at which the other calibration zone 141 is located within the detection field of view when the galvanometer feedback is normal.

Similar to step S2311, before determining the compensation coefficient, a second ratio can be obtained based on the measured value and the true value of the azimuth angle of the other calibration zone 141 among the two calibration zones 141. This second ratio can characterize the sensitivity change of the scanning element on the side of this calibration zone 141.

Step S2313: If the similarity between the first ratio and the second ratio is higher than a similarity threshold, then determine the measured included angle according to the two measured azimuth angles, wherein the measured included angle is the included angle formed by the two calibration zones 141 within the detection field of view.

The similarity between the first ratio and the second ratio refers to the degree of similarity between them, and its quantification method can vary. For example, in some embodiments, the ratio of the smaller one of the first ratio and the second ratio to the larger one can be taken as their similarity. Of course, in other embodiments, a mapping relationship can be established between the absolute value of the difference between the first ratio and the second ratio and the similarity; the smaller the absolute value of the difference, the higher the similarity. The similarity threshold is a threshold used to judge whether the similarity between the first ratio and the second ratio is high. It can be configured as 85%, 90%, or 95%, etc. When the similarity between the first ratio and the second ratio is higher than the similarity threshold, it indicates that the sensitivity changes of the scanning element in the directions towards the two calibration zones 141 are roughly the same. At this time, the measured included angle can be determined based on the measured azimuth angles corresponding to the two calibration zones 141, in order to further determine the compensation coefficient through this measured included angle. For example, if the measured azimuth angles have signs (e.g., the horizontal azimuth angle is negative on the left side of the LiDAR 100 and positive on the right side), the measured included angle can be determined by the difference between the measured azimuth angle of the calibration zone 141 on the right side and the measured azimuth angle of the calibration zone 141 on the left side. Of course, regardless of whether the measured azimuth angles have signs (positive/negative), the measured included angle can be taken as the sum of the absolute values of the two measured azimuth angles.

As for the method of determining the compensation coefficient from the measured included angle and the preset angle value, refer to step S232 above, which will not be repeated here.

Step S240: Perform angle compensation on the detection point cloud data of the LiDAR 100 according to the compensation coefficient.

After obtaining the compensation coefficient, the preparatory work for the azimuth angle calibration method of the LiDAR 100 is basically complete. The compensation coefficient can be used to compensate the azimuth angle obtained based on the scanning element whose sensitivity has changed. For example, in some embodiments, when the LiDAR 100 determines the azimuth angle corresponding to a point in the detection point cloud data based on the feedback information of the scanning element and a preset mapping relationship (i.e., during the formation of the point cloud data), it can further divide by the aforementioned compensation coefficient to obtain a calibrated azimuth angle. The calibrated azimuth angle information is then used as the information carried by that point in the point cloud data. As another example, in other embodiments, the first mapping relationship can be iterated based on the compensation coefficient. Specifically, if the azimuth angle is the dependent variable obtained by taking a characteristic of the scanning element's feedback signal (e.g., amplitude) as the independent variable and the first mapping relationship as the function, then the first mapping relationship can be divided by the compensation coefficient to obtain an iterated second mapping relationship. Then, based on the characteristic of the scanning element's feedback signal and the second mapping relationship, the calibrated azimuth angle information can be obtained, and this azimuth angle information is used as the information carried by the point in the point cloud data.

It is worth mentioning that, similar to the embodiment corresponding to steps S110 to S140, although the above embodiment uses the ratio of the measured azimuth angle to the preset angle value as the compensation coefficient, the present application is not limited thereto. In other embodiments of the present application, the compensation coefficient can also be obtained in other forms based on the measured azimuth angle and the preset angle value. Accordingly, the method for compensating the subsequent point cloud data in step S240 can be adjusted accordingly. For example, in some other embodiments of the present application, the ratio of the preset angle value to the measured azimuth angle can be used as the compensation coefficient. In this case, step S240 would multiply the point cloud data by this compensation coefficient when performing angle compensation.

Similar to the embodiment corresponding to steps S110 to S140, this embodiment also compensates the detection point cloud data through the compensation coefficient, so that the detection point cloud data carries the calibrated azimuth angle information. Therefore, the calibration method provided by the embodiments of the present application can also address the issue of declining control accuracy during the scanning process of the LiDAR 100 in the related art.

However, different from the embodiment corresponding to steps S110 to S140, the embodiment of the present application determines the compensation coefficient based on the measured value (i.e., the aforementioned measured included angle) and the true value (i.e., the aforementioned preset angle value) of the included angle formed by the azimuth angles of the two calibration zones 141 within the detection field of view of the LiDAR 100. Given the same azimuth angle measurement error, increasing the measured value can, to some extent, reduce the impact of the azimuth angle measurement error, thereby contributing to a more accurate compensation coefficient.

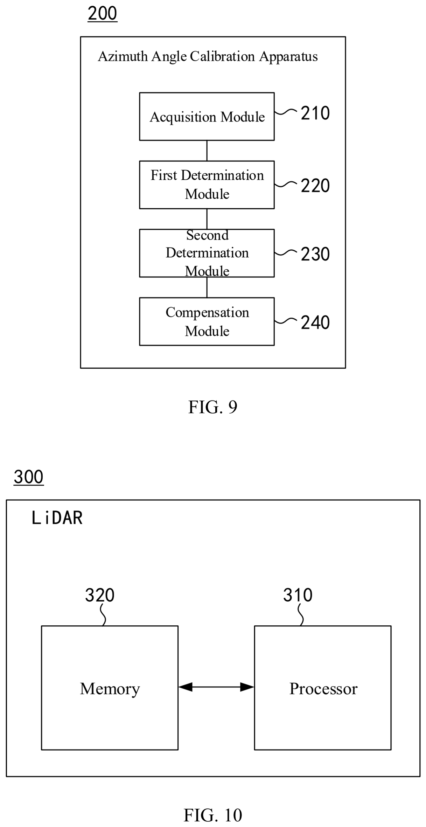

Based on the same inventive concept, an embodiment of the present application further provides an azimuth angle calibration apparatus 200. This azimuth angle calibration apparatus 200 is applied to a LiDAR 100. The LiDAR 100 includes the aforementioned transceiver module 120, scanning module 130, and calibration element 140. The calibration element 140 is located within the detection field of view of the LiDAR 100 and includes a calibration zone 141. This azimuth angle calibration apparatus 200 is used to execute the steps in the aforementioned method embodiments. Please refer to FIG. 9, which shows a schematic diagram of the azimuth angle calibration apparatus 200 provided by some embodiments. The azimuth angle calibration apparatus 200 includes:
An acquisition module 210, configured to acquire calibration point cloud data, wherein the calibration point cloud data includes at least one frame of point cloud data of the LiDAR 100;
A first determination module 220, configured to determine a measured azimuth angle according to the calibration point cloud data, wherein the measured azimuth angle is the azimuth angle corresponding to the calibration zone 141;
A second determination module 230, configured to determine a compensation coefficient according to the measured azimuth angle and a preset angle value, wherein the preset angle value is an angle value determined based on the azimuth angle at which the calibration zone 141 is located within the detection field of view when the galvanometer feedback is normal; and
A compensation module 240, configured to perform angle compensation on the detection point cloud data of the LiDAR 100 according to the compensation coefficient, wherein the detection point cloud data is the point cloud data formed during the operation of the LiDAR 100.

In some embodiments, the aforementioned first determination module 220 includes a first determination unit and a second determination unit. The first determination unit is configured to determine, within the calibration point cloud data, a target region constituted by data points whose pulse width is greater than a pulse width threshold in the point cloud data. The second determination unit is configured to determine the azimuth angle corresponding to the center point of the target region as the aforementioned measured azimuth angle.

In some embodiments, the aforementioned LiDAR 100 includes two calibration elements 140. The calibration zones 141 of the two calibration elements 140 are symmetrically distributed about a reference vertical plane. The reference vertical plane is a plane passing through the central axis of the detection field of view of the LiDAR 100 and perpendicular to the bottom surface of the LiDAR 100. The aforementioned first determination module 220 is configured to determine the measured azimuth angles corresponding to the calibration zones 141 of the two calibration elements 140. The aforementioned second determination module 230 includes a third determination unit and a fourth determination unit. The third determination unit is configured to determine a measured included angle according to the two measured azimuth angles, wherein the measured included angle is the included angle formed by the two calibration zones 141 within the detection field of view. The fourth determination unit is configured to determine the compensation coefficient according to the measured included angle and the preset angle value, wherein the preset angle value is the included angle formed by the two calibration zones 141 within the detection field of view when the galvanometer feedback is normal.

In some embodiments, the aforementioned compensation module 240 is configured to determine the ratio of the measured included angle to the preset angle value as the compensation coefficient; or, determine the ratio of the preset angle value to the measured included angle as the compensation coefficient.

In some embodiments, the aforementioned third determination unit is configured to:
determine the ratio of one said measured azimuth angle to a corresponding first preset angle value as a first ratio, wherein the first preset angle value is an angle determined based on an azimuth angle at which one said calibration zone 141 is located within the detection field of view when the galvanometer feedback is normal;
determine the ratio of the other said measured azimuth angle to a corresponding second preset angle value as a second ratio, wherein the second preset angle value is an angle determined based on an azimuth angle at which the other said calibration zone 141 is located within the detection field of view when the galvanometer feedback is normal; and
when a similarity between the first ratio and the second ratio is higher than a similarity threshold, then determine the measured included angle according to the two measured azimuth angles, wherein the measured included angle is the included angle formed by the two calibration zones 141 within the detection field of view.

In some embodiments, the aforementioned compensation unit is configured to, when determining the azimuth angle corresponding to the detection point cloud data, further divide by the aforementioned compensation coefficient to obtain the calibrated azimuth angle of the detection point cloud data.

In some embodiments, a first preset mapping relationship exists between the feedback signal of the scanning element of the LiDAR 100 and the corresponding azimuth angle. The aforementioned compensation unit is configured to update the first preset mapping relationship to a second preset mapping relationship according to the compensation coefficient.

Based on the same inventive concept, an embodiment of the present application further provides a LiDAR 300. Please refer to FIG. 10, which shows a schematic diagram of the LiDAR 300. The LiDAR 300 includes: a memory 320 and a processor 310. The memory 320 stores executable program code. The processor 310 is configured to call and execute the executable program code to execute the aforementioned azimuth angle calibration method for the LiDAR.

In this embodiment, the LiDAR 300 can be divided into functional modules according to the foregoing method examples. For example, each function may correspond to a functional module, or two or more functions may be integrated into one processing module. The integrated module may be implemented in hardware. It should be noted that the division of modules in this embodiment is schematic and is only a logical function division. There may be other division methods in actual implementation.

In the case of dividing each function into corresponding functional modules, the LiDAR 100 may include: an acquisition module 210, a first determination module 220, a second determination module 230, and a compensation module 240, etc. It should be noted that all related content of the various steps involved in the foregoing method embodiments can be cited in the functional descriptions of the corresponding functional modules, and details are not repeated here.

In the case of using integrated units, the LiDAR 300 may include a processing module and a storage module. The processing module can be used to control and manage the actions of the LiDAR 300. The storage module can be used to support the LiDAR 300 in storing relevant program code and data, etc.

The processing module may be a processor or a controller, and it can implement or execute the various exemplary logical blocks, modules, and circuits described in conjunction with the disclosure of the present application. The processor may also be a combination for computing functions, for example, including a combination of one or more microprocessors, a combination of a Digital Signal Processor (DSP) and a microprocessor, etc. The storage module may be a memory.

This embodiment also provides a computer-readable storage medium. The computer-readable storage medium stores computer program code. When the computer program code is run on a computer, it causes the computer to execute the relevant method steps to implement the azimuth angle calibration method for the LiDAR described in the foregoing embodiments.

This embodiment also provides a computer program product. When the computer program product is run on a computer, it causes the computer to execute the relevant steps in the foregoing method to implement the azimuth angle calibration method for the LiDAR described in the foregoing embodiments.

In the description of this application, it should be understood that terms such as "first" and "second" are used for descriptive purposes only and cannot be understood as indicating or implying relative importance. Those of ordinary skill in the art can understand the specific meanings of the above terms in this application based on the specific context. Furthermore, in the description of this application, unless otherwise specified, "a plurality of" means at least two, for example, two, three, four, etc. "and/or" describes the association relationship of associated objects, indicating that three relationships may exist. For example, A and/or B may indicate: A exists alone, both A and B exist, and B exists alone. The character "/" generally indicates an "or" relationship between the associated objects.

The above disclosures are only the preferred embodiments of the present application and are not intended to limit the scope of the present application. Therefore, equivalent changes made according to the claims of the present application still fall within the scope of this application.

## Claims

1. An azimuth angle calibration method for a LiDAR, wherein the LiDAR comprises a calibration element located within a detection field of view of the LiDAR, and the calibration element is provided with a calibration zone, the method comprising:
acquiring calibration point cloud data, wherein the calibration point cloud data comprises at least one frame of point cloud data of the LiDAR;
determining a measured azimuth angle according to the calibration point cloud data, wherein the measured azimuth angle is a measured value of an azimuth angle corresponding to the calibration zone;
determining a compensation coefficient according to the measured azimuth angle and a preset angle value; and
performing angle compensation on azimuth angle information of detection point cloud data of the LiDAR according to the compensation coefficient, wherein the detection point cloud data is point cloud data formed during operation of the LiDAR.

2. The method according to claim 1, wherein, a reflectivity of the calibration zone is higher than a first threshold, and the determining a measured azimuth angle according to the calibration point cloud data comprises:
determining, within the calibration point cloud data, a target region constituted by points having a pulse width greater than a pulse width threshold in the point cloud data; and
determining an azimuth angle corresponding to a center point of the target region as the measured azimuth angle.

3. The method according to claim 2, wherein, the calibration element further comprises a reference region, the reference region is a region having a reflectivity lower than a second threshold, the second threshold is less than the first threshold, and the reference region is adjacent to the calibration zone.

4. The method according to claim 3, wherein, the reference region surrounds the corresponding calibration zone;
the first threshold is greater than or equal to 80%, and the second threshold is less than or equal to 30%.

5. The method according to claim 1, wherein, the LiDAR comprises one calibration zone, and the preset angle value is an azimuth angle at which the calibration zone is located within the detection field of view when a feedback signal from a scanning element is normal.

6. The method according to claim 1, wherein, the LiDAR comprises a housing, a transceiver module, a scanning module, and two calibration elements;
the transceiver module is configured to generate detection light for detecting a target object, and to receive echo light formed by reflection of the detection light from the target object; the scanning module comprises a scanning element rotatable relative to the housing, the scanning element is configured to receive and reflect the detection light to enable the detection light to form the detection field of view of the LiDAR; calibration zones of the two calibration elements are symmetrically distributed about a reference vertical plane, the reference vertical plane being a plane passing through a central axis of the detection field of view of the LiDAR and perpendicular to a bottom surface of the LiDAR;
the determining a measured azimuth angle comprises: determining measured azimuth angles corresponding to the calibration zones of the two calibration elements;
the determining a compensation coefficient according to the measured azimuth angle and a preset angle value comprises:
determining a measured included angle according to the two measured azimuth angles, wherein the measured included angle is a measured value of an included angle formed by the two calibration zones within the detection field of view; and
determining the compensation coefficient according to the measured included angle and the preset angle value, wherein the preset angle value is: an included angle value formed by the two calibration zones within the detection field of view when the feedback from the scanning element is normal.

7. The method according to claim 6, wherein, the determining a compensation coefficient according to the measured included angle and the preset angle value comprises:
determining a ratio of the measured included angle to the preset angle value as the compensation coefficient; or
determining a ratio of the preset angle value to the measured included angle as the compensation coefficient.

8. The method according to claim 6, wherein, the determining a measured included angle according to the two measured azimuth angles comprises:
determining a ratio of one of the measured azimuth angles to a corresponding first preset angle value as a first ratio, wherein the first preset angle value is: an angle determined based on an azimuth angle at which one of the calibration zones is located within the detection field of view when the feedback from the scanning element is normal;
determining a ratio of the other of the measured azimuth angles to a corresponding second preset angle value as a second ratio, wherein the second preset angle value is: an angle determined based on an azimuth angle at which the other of the calibration zones is located within the detection field of view when the feedback from the scanning element is normal; and
if a similarity between the first ratio and the second ratio is higher than a similarity threshold, then determining the measured included angle according to the two measured azimuth angles, wherein the measured included angle is a measured value of the included angle formed by the two calibration zones within the detection field of view.

9. The method according to claim 1, wherein, the performing angle compensation on azimuth angle information of detection point cloud data of the LiDAR according to the compensation coefficient comprises:
when determining an azimuth angle corresponding to the detection point cloud data, further dividing the azimuth angle by the compensation coefficient to obtain a calibrated azimuth angle of the detection point cloud data.

10. The method according to claim 1, wherein, the LiDAR comprises a scanning module, the scanning module comprises a scanning element rotatable relative to a housing of the LiDAR, the scanning element is configured to receive and deflect detection light to enable the detection light to form the detection field of view, the detection light is used for detecting a target object, and a first preset mapping relationship exists between a feedback signal of the scanning element and a corresponding azimuth angle;
the performing angle compensation on the point cloud data according to the compensation coefficient comprises:
updating the first preset mapping relationship to a second preset mapping relationship according to the compensation coefficient.

11. An azimuth angle calibration apparatus, applied to a LiDAR, wherein the LiDAR comprises a calibration element located within a detection field of view of the LiDAR, and the calibration element is provided with a calibration zone, the azimuth angle calibration apparatus comprising:
an acquisition module, configured to acquire calibration point cloud data, wherein the calibration point cloud data comprises at least one frame of point cloud data of the LiDAR;
a first determination module, configured to determine a measured azimuth angle according to the calibration point cloud data, wherein the measured azimuth angle is a measured value of an azimuth angle corresponding to the calibration zone;
a second determination module, configured to determine a compensation coefficient according to the measured azimuth angle and a preset angle value; and
a compensation module, configured to perform angle compensation on azimuth angle information of detection point cloud data of the LiDAR according to the compensation coefficient, wherein the detection point cloud data is point cloud data formed during operation of the LiDAR.

12. A LiDAR, comprising:
a housing, provided with an accommodation cavity;
a transceiver module, disposed in the accommodation cavity, and configured to generate detection light for detecting a target object, and to receive echo light formed by reflection of the detection light from the target object;
a scanning module, disposed in the accommodation cavity, wherein the scanning module comprises a scanning element rotatable relative to the housing, the scanning element is configured to receive and reflect the detection light to enable the detection light to form a detection field of view of the LiDAR; and
a calibration element, disposed in the accommodation cavity, comprising a calibration zone located within the detection field of view.

13. A LiDAR, comprising:
a memory, configured to store executable program code; and
a processor, configured to invoke and run the executable program code from the memory, causing the LiDAR to execute the method according to any one of claims 1-10.
